# EUROPEAN PATENT SPECIFICATION

(11) **EP 2 843 965 B1**
(45) Date of publication and mention of the grant of the patent: **14.12.2016**
(21) Application number: 13182451.8
(22) Date of filing: 30.08.2013
(51) Int. Cl.: H04Q 9/00

(54) **Wireless apparatus monitoring system**
Drahtloses Vorrichtungsüberwachungssystem
Système de surveillance d'appareil sans fil

(43) Date of publication of application: 04.03.2015
(73) Proprietor: Mucha, Loic, Hong Kong (CN)
(72) Inventor: Mucha, Loic, Hong Kong (CN)
(74) Representative: Chaillot, Geneviève

(56) References cited:
- WO-A1-01/63848
- US-A1- 2006 202 848

## Description

### FIELD OF THE INVENTION

The present invention relates generally to wireless monitoring systems, and in particular to a wireless monitoring system for household appliances and cooking utensils.

### BACKGROUND

There are a multitude of systems available for users to remotely monitor apparatuses, such has household appliances and devices, via wireless transmission of sensor data to a user's computing device. The systems have limitations, though, in their capacity to monitor more than one type of sensor and/or apparatus, and to wireless exchange information in real-time with a remotely located user. They also require the apparatuses that are housing the sensor to include electronic components for analyzing the sensor data before wirelessly transmitting it. This requires extra costs in the production of the apparatuses with sensors. And, in most cases, the systems can only transmit sensor data to a user's computing device, but they are not enabled to receive commands from the user's computing device to control the operation of the apparatus.

For example, the United States Patent 7,722,248 entitled "Wireless Remote Cooking Thermometer System" discloses a system comprising a temperature probe connected via a cable to a radio frequency (RF) transmitter device for sending temperature data wirelessly to a second RF receiver unit. The RF transmitter is unable to process data from any sensor type other than a temperature sensor. The system also has limited capacities because the second unit (i.e. a user's computing device) is only able to receive sensor data, but not to transmit control commands to the first unit, such as to turn off the oven.

Therefore, there is a need for a device that wirelessly exchanges information with a user's computing device comprising sensor data and control commands for monitoring of a wide variety of apparatuses. Only one device would be required to monitor a multitude of sensors types housed within different apparatuses, such as temperature and weight sensors for cooking, humidity and barometric pressure for weather conditions, water sprinkler on/off controls for lawn maintenance, and so forth. And, the apparatuses should not be required to house additional electronic components to analyze the sensor data, as this is accomplished by a software application on the user's computing device.

US patent application No. 2006/202848 A1 discloses a portable warning system for cooking appliances, which includes a mechanism for detecting the state of the appliance through a current sensor for electric appliances or a sensor assembly operatively connected to an actuating member positioned adjacent to a range knob, a range transmitter being operatively connected to the detection mechanism for detecting a signal from the detection mechanism.

PCT application WO 01/63848 A1 discloses a communications module for an appliance, which includes a communications protocol translator which translates signals received from a communications media into appliance controller signals and appliance control signals received from the appliance controller into a communications protocol of an appliance communications network, the module including a radio frequency transceiver or modem for connection to an appliance network.

### SUMMARY

The present invention relates to a wireless apparatus monitoring system, to receive data from a variety of types of sensors (e.g. measuring weight, temperature) housed within apparatuses (e.g. a kitchen appliances, utensils) that are electronically compatible with the monitoring device. The monitoring device then wirelessly transmits the sensor data to a User's mobile device (i.e. a smartphone), which comprises an application or software to assist in analyzing the data.

The application/software may also display information and instructions to assist the User in utilizing the apparatus, such as cooking recipes. And, the present invention also comprises the ability for the User to transmit commands using the application/software on their communications device to transmit a signal to the monitoring device to control some types of apparatuses, such as ovens, irons, and coffee pots. For example, the User's device can send a signal to the apparatus (e.g. oven) via the monitoring device to change the operating state of the apparatus (e.g. turn off an oven).

In an embodiment, the wireless communication between the monitoring device and the User's electronic communications device is via Bluetooth® technology, but other wireless means are within the scope of this invention. In other embodiments, the monitoring device may also wirelessly communicate with the apparatus and the User's electronic communications device.

The monitoring device is "universal" in that it may be utilized with a wide variety of electronic apparatuses comprising a variety of types of sensors that can transmit and receive data from the monitoring device's microcontroller. The apparatuses may be "compatible" with the monitoring device by completing an electrical circuit when the monitoring device is inserted into the apparatus, and directly sending data through the circuit to the wireless unit (i.e. Bluetooth® chip) within the monitoring device, which subsequently wirelessly transmits the data to the User's communications device. Therefore, one iKT™ monitoring device is compatible for use with any apparatus comprising electronic components compatible with the monitoring device: such as with a multitude of kitchen utensils (i.e. mixing bowls to measure the weight of ingredients, spatulas and oven mats to measure food temperature, cups to measure liquid volumes, etc..), lawn equipment (i.e. sprinkler systems), home alarm systems (e.g. fire, locks).

The apparatuses may also be "non-compatible", but wirelessly enabled so as to transmit sensor data to the wireless unit in the monitoring device, which subsequently transmits it to the User's electronic communications device. Therefore, the universal electronic monitoring device can be used with a variety of electronic products comprising sensors and User interfaces to display the sensor data. By pairing the universal device with the electronic product, the product would no longer require electronic components to analyze the sensor output or a separate monitor to display it. The universal device and the User's electronic communications device would provide this function.

A method of use of the universal electronic monitoring device with compatible apparatuses comprises transmitting sensor data from an electronic apparatus to the microcontroller housed within the monitoring device. The microcontroller analyses the sensor data and then electronically transmits the data to the monitoring device's wireless transmission chip (e.g. a Bluetooth® chip), which subsequently wirelessly transmits the data to the User's electronic communications devices that are paired with the monitoring device. Alternatively, the microcontroller converts the sensor data (analog-to-digital) for transmission by the wireless transmitter to the User's electronic communications device, where a software application will analyze the sensor data.

A method of use of the universal electronic monitoring device with non-compatible apparatuses comprises wireless transmitting sensor data from the electronic apparatus to the microcontroller housed within the monitoring device. The microcontroller analyzes the sensor data and transmits then electronically transmits the data to the monitoring device's wireless transmission means (e.g. a Bluetooth® chip). The transmission means then wirelessly transmits the sensor data to the User's electronic communications device, thus bypassing the apparatus's electronic circuits for analyzing the sensors and the User interface to view the data. Alternatively, the microcontroller converts the sensor data (analog-to-digital) for transmission by the wireless transmitter to the User's electronic communications device, where a software application will analyze the sensor data.

In a particular embodiment, the universal electronic monitoring device is used to assist in the preparation of a meal. The monitoring device receives data from sensors housed within kitchen appliances and utensils to monitor parameters involved in cooking, such as the temperature, weight, and volume of solid and liquid food and recipe ingredients. The monitoring device wirelessly transmits the sensor data to User's electronic communications device. The User need not be in the immediate vicinity of the appliance or utensil to receive the data, but may instead be located at a distance, such as in a separate room of a home and still monitor, for example, the temperature in an oven.

The universal electronic monitoring device also has the ability to wirelessly communicate with a variety of types of sensors housed within a variety of types of kitchen appliances and utensils. For example, the User can utilize one monitoring device to receive sensor data throughout the process of cooking a meal using different appliances and utensils: from weighing the ingredients in a mixing bowl; measuring the volume of a liquid in a measuring cup; and monitoring the temperature inside an oven or on a skillet cooking surface. And because the monitoring device is "universal", then the User merely moves the monitoring device from one appliance and utensil to the next while preparing the food by merely removing and inserting the monitoring device into the measuring cup, then the mixing bowl, then the spatula/turner, and then the oven.

The present invention also relates a method of use of the User's electronic communications device to transmit commands for controlling electronic apparatuses, such as kitchen appliances and automated utensils. In some cases, the User may transmit commands to the sensors by wirelessly transmitting the command from the User's electronic communications device to the universal electronic monitoring device that subsequently transmits it to the sensors in the appliance and utensil. For example, the monitoring device can be used to remotely reduce the temperature of a kitchen oven, turn on/off a coffee pot, and/or reduce the speed on a mixer or blender.

The universal electronic monitoring device may comprise the following components: a) a switching means for triggering the monitoring device in the vicinity of sensors housed within an apparatus; a read and write memory; a microcontroller to process the sensor and memory data; a means to connect to sensors and transmit raw data to the microcontroller; a means to wirelessly transmit processed data from the microcontroller to the User's electronic communications device; a means to power and recharge the device, wherein monitoring said device is compatible with two or more apparatuses.

In a particular embodiment of the present invention, the universal electronic monitoring device dimensions are 20 by 40 by 10 millimeters and comprise the following components: 1) a Bluetooth® chip (V2.1 or later) from transmitting and receiving data to surrounding Bluetooth® enabled User's electronic communications devices: 2) a magnetic switch that triggers the monitoring device's electronic circuit when placed in close contact with a magnet located on the appliance/utensil/device; 3) a battery microchip measuring the monitoring device's power level that is displayed on the outside of the device; 4) a microcontroller for transmitting and receiving data between the sensors and the Bluetooth® chip; 5) a USB connector to recharge the battery; 6) a light emitting diode (LED) viewable on the outside of the monitoring device to indicate the circuit state; 7) a 10 pin connector on the back of the monitoring device for connecting with the sensors; 8) a 3.3 volt battery empowering the circuit; and 9) EEPROM to read and write sensor data memory. The microcontroller (4): a) receives information from the sensors located in the compatible apparatus (i.e. appliance/utensil/device) and from the EEPROM, and subsequently sends the data to the Bluetooth® chip; and/or b) receives information from the Bluetooth® chip, processes and sends it to the compatible apparatus.

The universal electronic monitoring device is beneficial for use in a variety of situations. For example, the device is useful for events requiring precise control of electronic apparatuses, such as cooking difficult recipes. The monitoring device is also suitable for use by individuals with physical impairments, such as vision and mobility, to assist them in controlling electronic apparatuses. And it is also useful for individuals whose attention is diverted to other tasks (i.e. watching infants), or who are located in rooms other than where the apparatuses are located.

The present invention also comprises an electronic communications device application (i.e. mobile application) for use in receiving, transmitting, and viewing commands and data between the User's electronic communications device and the monitoring device. The User's device may also comprise the ability to emit audio messages from the monitoring device, such as for visually impaired Users.

An embodiment of the invention provides a universal electronic monitoring device to wirelessly transmit an apparatus's sensor data to a User's electronic communications device, comprising:
a) a switching means for triggering the monitoring device in the vicinity of a sensor unit housed within an apparatus, wherein said sensor unit measures the apparatus's current conditions;
a) a read and write memory;
b) a means to connect to a sensor unit and transmit raw data to a microcontroller;
c) a microcontroller to process the sensor and memory data;
d) a means to wirelessly transmit processed data from the microcontroller to the User's electronic communications device; and,
e) a means to power and recharge the device, wherein said device is compatible with two or more apparatuses.

In an embodiment of the invention, said microcontroller processing comprises converting the sensor data from analog-to-digital.

In an embodiment of the invention, said sensors measure the current conditions of the apparatus, comprising: temperature, weight, viscosity, liquid volume, pressure, gas, contact, and sound.

In an embodiment of the invention, said apparatuses are for cooking and comprise preparation tools, oven tools, cooking gadgets, cooking tools, food containers, and kitchen and cooking appliances.

In an embodiment of the invention, said preparation tools comprise a mixing bowl, cutting board, cocktail shaker, sauce shaker, measuring jug and cup, and measuring spoons, and wherein said sensor unit detects the weight of food and cooking ingredients.

In an embodiment of the invention, said oven tools comprise a silicone mat, cake mold, and popup timers, and wherein said sensor unit detects the temperature of food.

In an embodiment of the invention, said cooking tools comprise a spatula, turner, basting spoon, slotted spoon, ladle, brush, and mini-slotted turner, and wherein said sensor unit detects the temperature of food.

In an embodiment of the invention, said food containers comprise, a) a food storage container, wherein said sensor unit detects food expiration date and quantity; and, b) an ice cube tray, wherein said sensor unit detect the temperature within a freezer.

In an embodiment of the invention, said gadgets comprise, a pizza cutter, a cheese grater, and ice cream scoop, and a whisk.

In an embodiment of the invention, said wireless transmission comprises a Bluetooth® chip within said device for receiving data from said device's microcontroller, and transmitting said data to said User's electronic communications device.

In an embodiment of the invention, the device further comprises means for transmitting commands from said User's device to said chip, and transmitting from said chip to said sensor unit to control the operation of said apparatus.

In an embodiment of the invention, said apparatus comprises a coffee maker, oven, and refrigerator.

An embodiment of the invention provides a method of use of a universal electronic monitoring device, comprising a switch, a microcontroller, and wirelessly unit, to wirelessly transmit an apparatus's sensor data to a User's electronic communications device, comprising:
a) inserting said monitoring device into said apparatus, wherein said apparatus's sensor unit and said device's electric circuit connect to activate said switch;
b) receiving and processing apparatus sensor unit data by the monitoring device's microcontroller;
c) transmitting processed data from said microcontroller to the monitoring device's wireless unit; and,
d) wirelessly transmitting processed data from said wireless unit to a User's electronic communications device, wherein said data is analyzed, stored and viewed.

In an embodiment of the invention, the method further comprises wirelessly transmitting apparatus control commands to said monitoring device from said User's device, wherein said monitoring device subsequently transmits said commands to said apparatus's sensor unit.

In an embodiment of the invention, said sensor units comprise sensors to measure temperature, weight, or pressure, and said apparatuses are for cooking.

### BRIEF DESCRIPTION OF THE DRAWINGS

The iKT™ device and methods of use that embody the above and other inventive features will now be described with reference to the following drawings:
FIG. 1 is an illustration of the system of the universal electronic monitoring device transmitting sensor data (i.e. weight) from a bowl to a User's electronic communications device (i.e. smartphone and/or laptop).
FIG. 2 is an illustration of various compatible apparatuses used in cooking and transmitting sensor data for temperature or weight to a User's electronic communications device.
FIG. 3 is a table disclosing numerous compatible apparatuses used in cooking that transmit cooking instructions and recipes, and/or sensor data.
FIGS. **4-6** are different types of illustrations of an exemplified circuit diagram of the universal electronic monitoring device.
FIG. **7** is an illustration of the 10-pin processor on the universal electronic monitoring device used to complete the electric circuit within compatible apparatuses.
FIGS. **8A-E** are illustrations of a variety of views of an exemplified mixing bowl comprising the sensor unit.

### DETAILED DESCRIPTION

The following definitions and methods are provided to better define the present invention and to guide those of ordinary skill in the art in the practice of the present invention. Unless otherwise noted, terms are to be understood according to conventional usage by those of ordinary skill in the relevant art.

As used herein, the term "universal electronic monitoring device" refers to a device comprising an electronic circuit enabled to receive and/or transmit data to a compatible apparatus, and transmit the data wirelessly to a User's electronic communications device.

As used herein, the term "compatible apparatus" refers to a device comprising a sensor, EEPROM chip, and a controller that performs a task that a User wishes to monitor remotely and/or to detect conditions to assist the User in effectively using the apparatus. The apparatus may further comprise a unique identification to permit the universal electronic monitoring device in identifying the apparatus as being compatible.

As used herein, the term "electronic communications device" refers to a computing device comprising wireless communications capabilities, such as Bluetooth® technology, for receiving data from the monitoring device comprising sensor data, and information regarding the use of the apparatus; and/or for transmitting commands to the monitoring device to control the apparatuses activity (i.e. on/off). Examples of User electronic communications devices comprise laptops, desktops, smartphones, and tablets.

As used herein, the term "sensor unit" refers to the electrical circuit housed within the apparatus (e.g. cooking oven) that enables transmission of sensor data to the monitoring device, as well as receipt and execution of commands from the User's electronic communications device (e.g. turn off oven).

### System Architecture

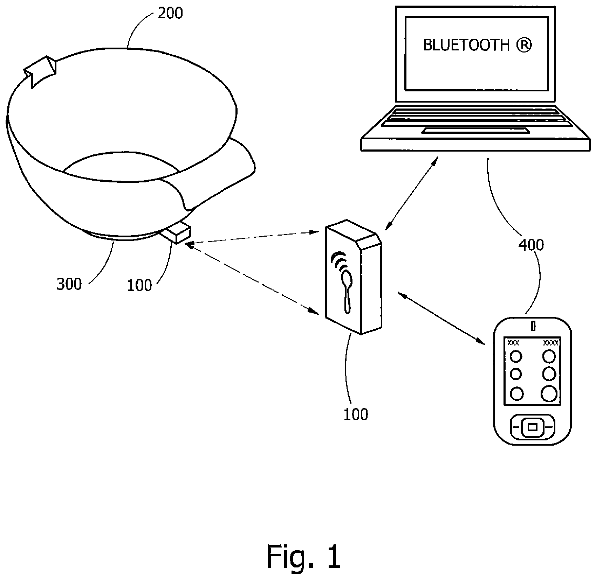

The system of the present invention comprises: a universal electronic monitoring device (**100**) (i.e. iKT™); an apparatus compatible with the monitoring device (**200**) and housing a sensor within the apparatus (**300**); and a User's electronic communication device (**400**) for receiving sensor data via wireless transmissions. FIG. 1 is an illustration of the system of the universal electronic monitoring device (**100**) transmitting sensor data (i.e. weight) from a cooking mixing bowl (**200**) to a User's electronic communications device (i.e. smartphone and/or laptop) (**400**), wherein the sensor unit (**300**) is located in the base of the bowl.

A User's electronic communications device (**400**) has a secondary memory device, such as, for example, a hard disk drive or other non-volatile memory, for storing sensor data and User information, such as lists of recipes and apparatus operating instructions. Device (**400**) also comprises a graphical interface user for displaying apparatus information, such as temperatures, weights and instructions.

The system also comprises an electronic communications device application or software (i.e. mobile application) for use in receiving, transmitting, and viewing commands and data between the User's electronic communications device and the monitoring device, and for analyzing the sensor data. The application or software comprise a computer readable medium containing computer executable instructions to carry out the methods of receiving and storing sensor data, and methods of transmitting apparatus operating commands (e.g. turn on/off); and methods of displaying User information, such as recipes, in accordance with the present invention. The computer executable instructions are adapted for execution by a hardware element, such as a processor, wherein the instruction comprise commands that when executed cause the processor to perform a corresponding set of commands, such as receive and analyze sensor data, and transmit apparatus operating commands. The software may be written or coded using a programming language, and stored using any type of computer-readable media or machine-readable media well known in the art. Examples of software in the present invention comprise any software components, programs, applications, computer programs, application programs, system programs, machine programs, and operating system software.

The User's device may also comprise the software to emit audio messages from the universal monitoring device, such as sensor data- temperature, weight, etc., and to receive and transmit audio messages from the User to the device- such as "turn off the oven". The software would be used, for example, by Users with a visually impairment. Software for assisting visually impaired individuals in using their mobile devices are readily known, such as Siri and Voiceover, and could be used in conjunction with the present invention. Or, visually impairment functionality could be incorporated into the software comprising apparatus control and sensor monitoring.

It will be appreciated by one with skill in the art that the application might be installed on the User's device (**400**) from a number of sources such as, for example, downloaded over the Internet from a server, or bundled with software provided by another software manufacturer (such as a Web browser provided by a Web browser manufacturer). It will be appreciated that the application will function in substantially the same manner regardless of the installation source or method.

### Wireless Transmission

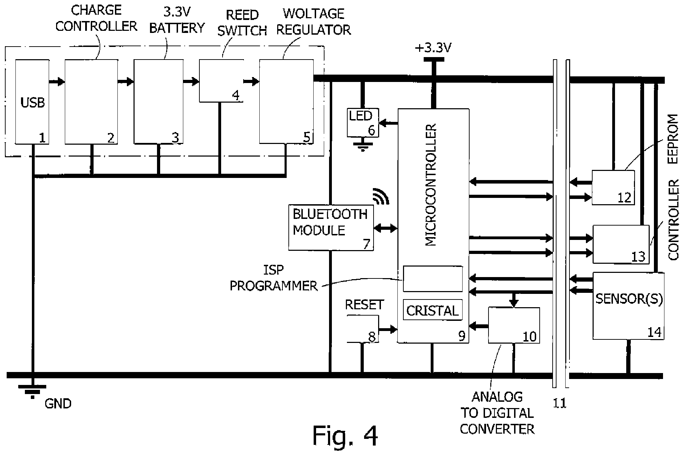

Wireless transmission methods include known cable-free methods, for example via infrared, wireless personal area network (WPAN) carried over wireless network technologies such as IrDA, Bluetooth®, Wireless USB, Z-Wave, ZigBee, or even Body Area Network.; or other radio links that comprise a wireless local area network (WLAN) based on the Institute of Electrical and Electronics Engineers' (IEEE) 802.11 standards. In a particularly preferred embodiment, the wireless transmission between the universal electronic monitoring device (iKT™ device) and the User's electronic communications device (i.e. smartphone) is accomplished via the use of Bluetooth® technology (V2.1- V4.0 or later) (FIG. **4**, # **7**). Bluetooth® electronic communications devices of the present invention comprise computing devices, such as laptops, desktops, tablets, mobile phones, etc., with a Bluetooth® wireless card either built in or added on via USB connector/adapter. Bluetooth® technology allows these computing devices to connect instantly to the Bluetooth® chip within the monitoring device in order to transmit data between the two devices. Additionally, the version of Bluetooth® chip used may alter the power required to be supplied by the battery (3), wherein later versions of Bluetooth®, such as V4.0, require significantly less power.

### Sensor Unit

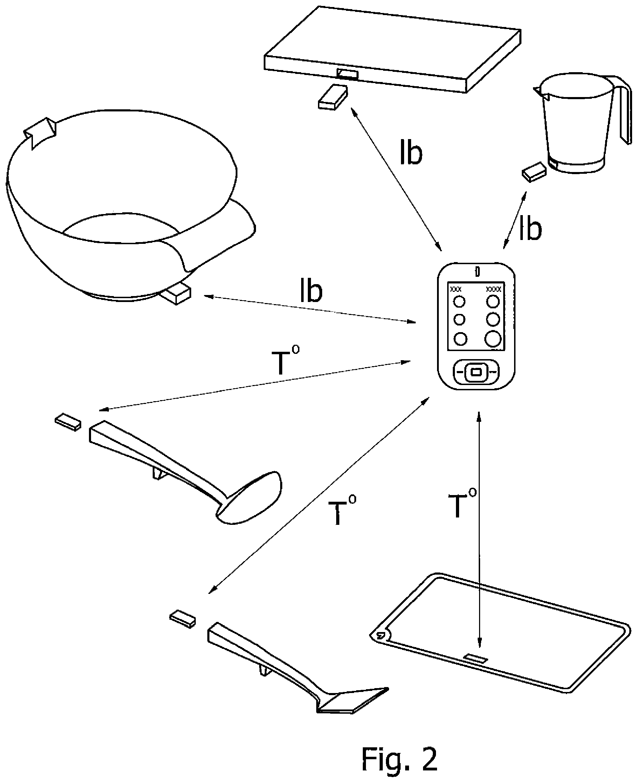

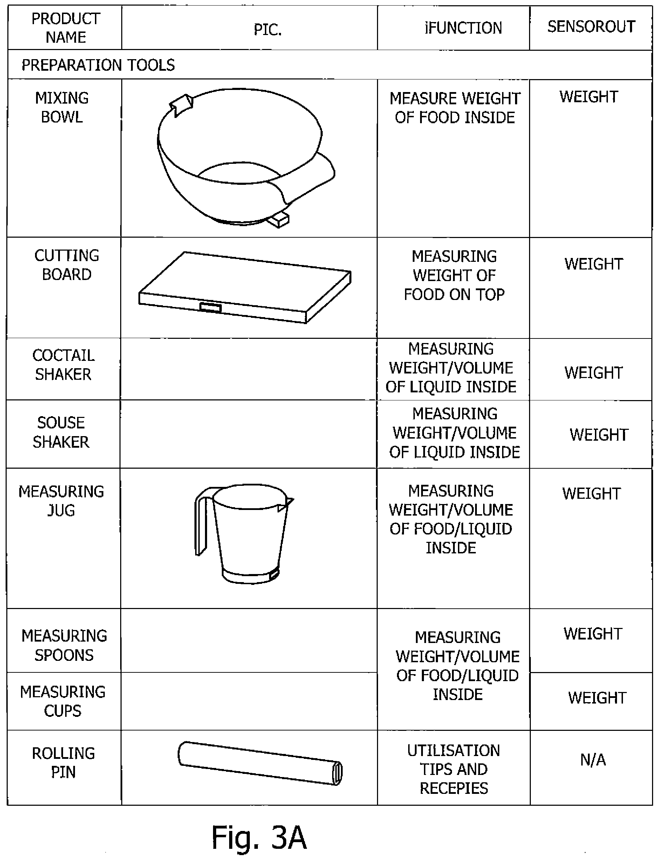

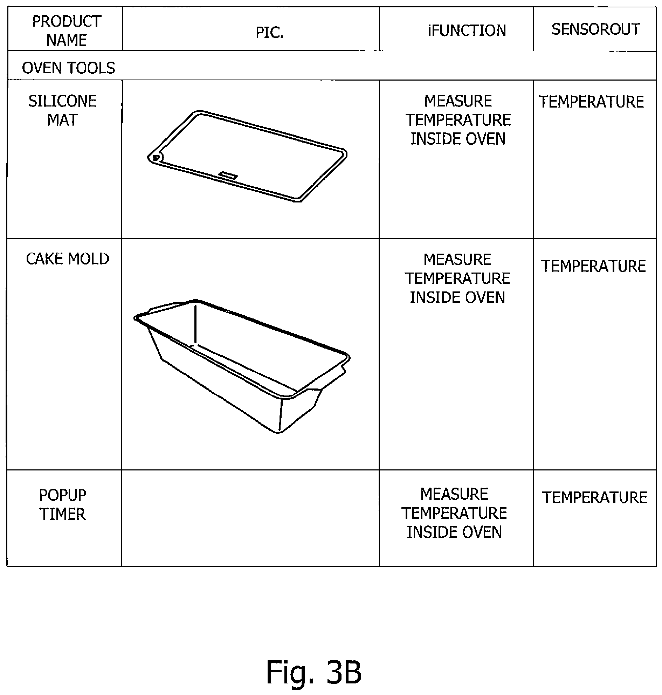

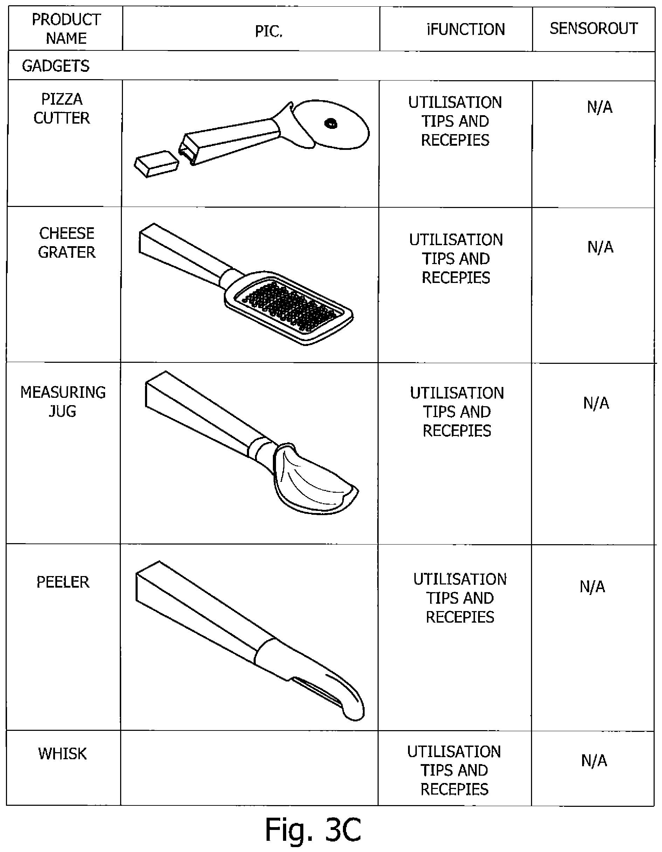

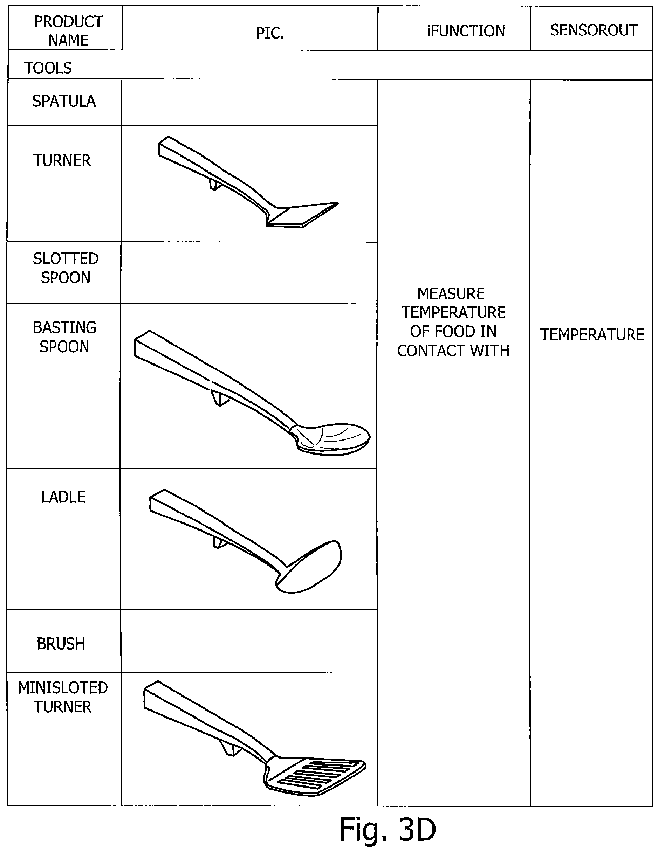

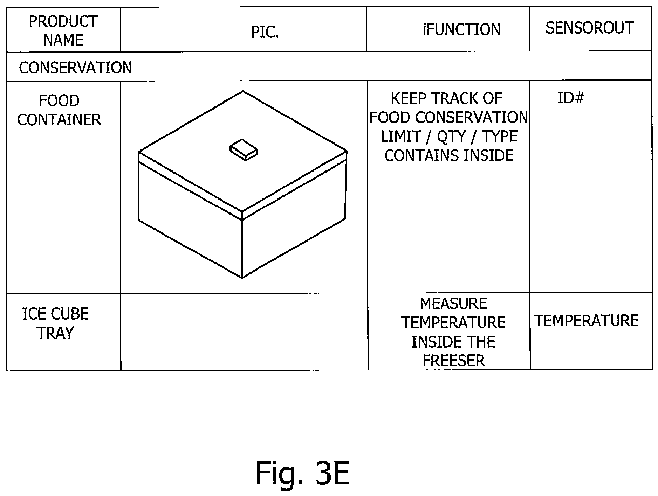

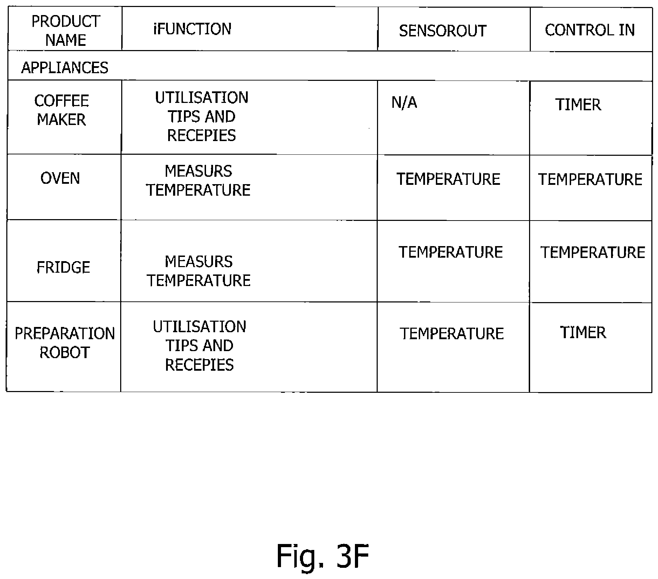

As illustrated in FIG. **2**, a variety of compatible apparatuses (**200**) comprise sensor units (**300**) that can electronically transmit sensor data to the electronic monitoring device (**100**) when the device (**100**) is inserted into the apparatuses (**200**) so as to complete an electrical circuit. Different apparatuses may house the monitoring devices in different locations within the apparatuses. For example, and as shown in FIGS. **2** and **3** as pertaining to apparatuses compatible for cooking environments, the monitoring device (i.e. box **100**) is inserted into the side of a cutting board; the side of the base of a mixing bowl and measuring jag/cup; the middle of the handle of a utensil (i.e. turner, spatula); one end of a rolling pin; and the end of the handle of a pizza cutter.

The sensor units (**300**) comprise: sensors to monitor conditions within and/or around an apparatus into which it is housed; means to collect and transmit sensor data to the monitoring device (**100**); means of activating switches located within the universal monitoring device (e.g. such as a magnet to activate a reed switch when the monitoring device is inserted into the apparatus); and a means for sensor data non-volatile memory storage (e.g. Electrically Erasable Programmable Read-Only Memory-EEPROM card). The sensor unit may also comprise a "controller" comprising electronic circuit components to enable a User to control the apparatus by sending commands from the communications device (**400**). The controller structure depends on the type of apparatus, and it may be different from one apparatus to the next.

Sensors for use in the apparatuses (**200**) of the present invention are widely known in the art: weight; temperature; air pressure; movement; pressure; gas; contact; sound; etc. The intended use of the apparatus also determines the type of sensor used for transmission of data to the monitoring device, such as temperature (T°) for a turner/spatula/ladle/oven mat or weight (lb.) for a mixing bowl/measuring jag/cup.

The table in FIG. **3** provides a list of apparatuses (**200**) for cooking wherein some apparatuses comprise sensors (**300**) to transmit data of cooking conditions, while other apparatuses signal the User's electronic communications device (**400**) to display apparatus utilization tips and recipes device's graphical interface. For example, those apparatuses that do not comprise sensors, such as pizza cutters, will still trigger the monitoring device (**100**) when it is connected to the apparatus (**200**). A wirelessly transmission will be sent from the monitoring device (**100**) to the User's electronic communications device (**400**) to cause the software/application on the device (**400**) to display utilization tips and recipes associated with the apparatus (**200**) (e.g. recipes for pizzas). The iKT™ apparatuses compatible with a iKT™ monitoring device that house sensors or not comprise: mixing bowls; cutting boards; cocktail shaker; sauce shakers; measuring jugs, spoons, and cups; rolling pins; silicone over mats; cake molds; popup timers; pizza cutters; cheese graters; ice cream scoops; peelers; whisks; spatulas; turners; basting spoons; slotted spoons; ladles; brushes; mini-slotted turner; food container; ice cube tray; coffee makers; ovens; refrigerators; and preparation robots.

### Electric Circuit of the Monitoring Device

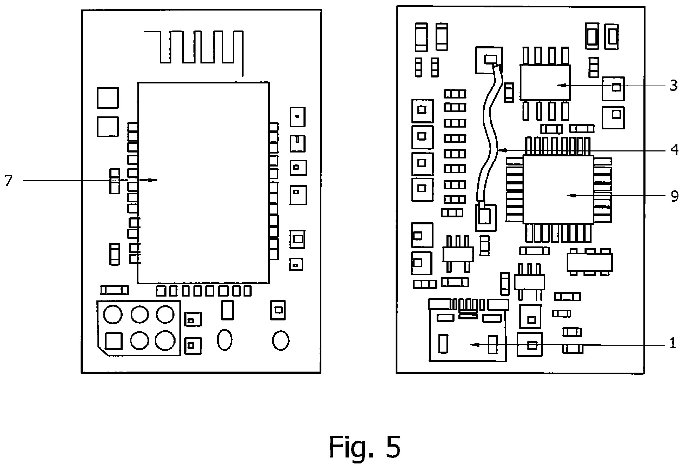

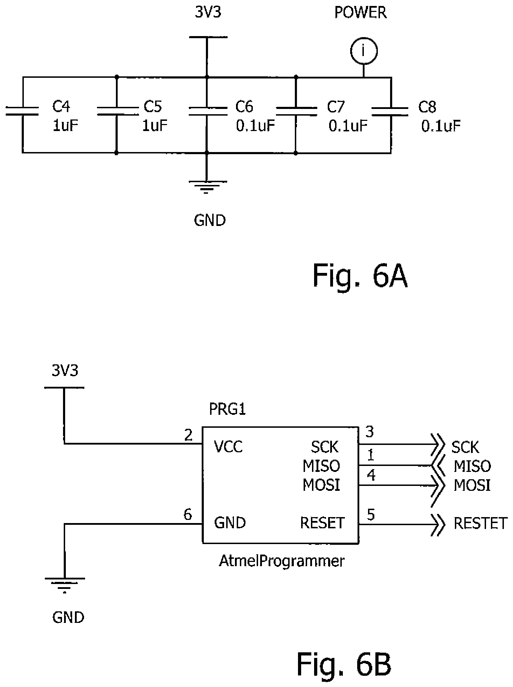

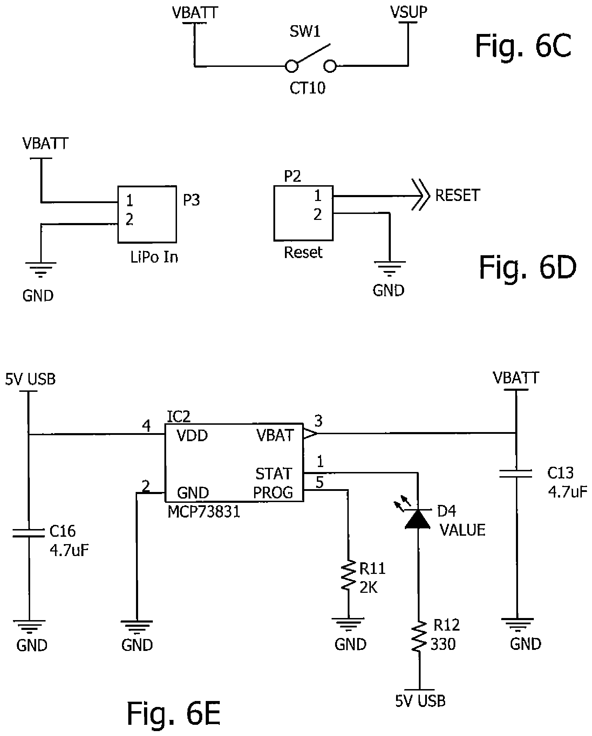

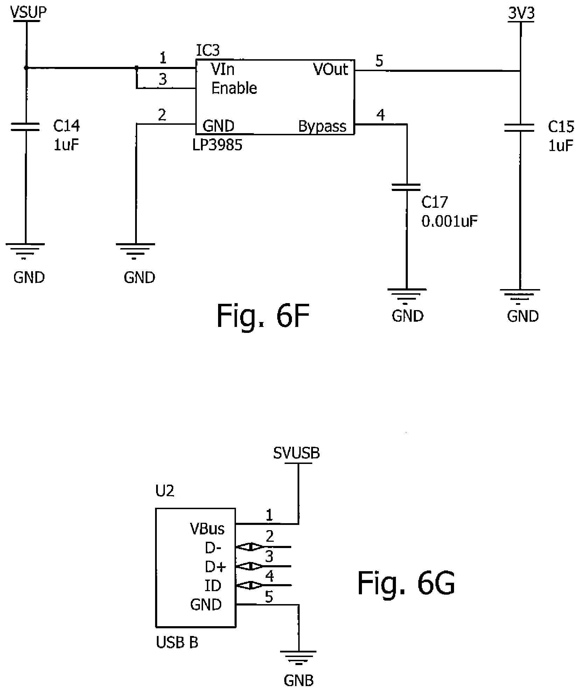

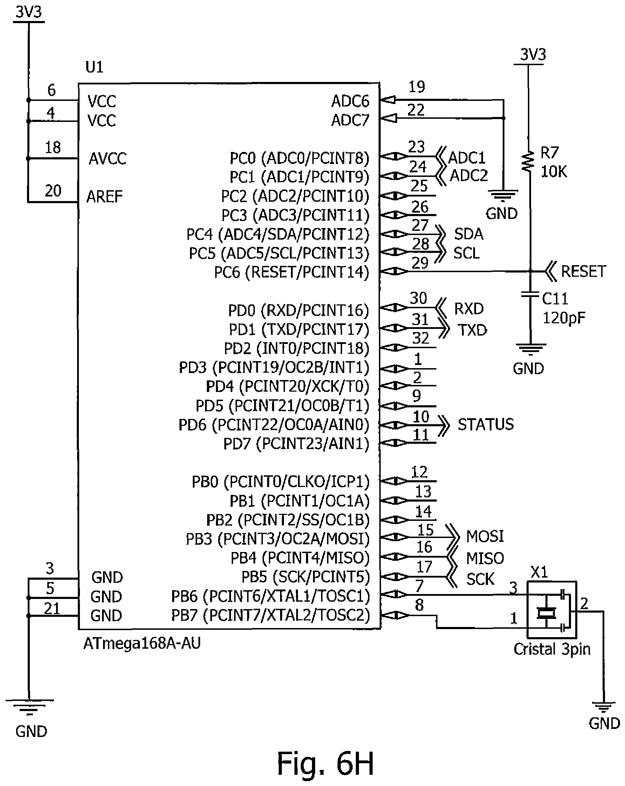

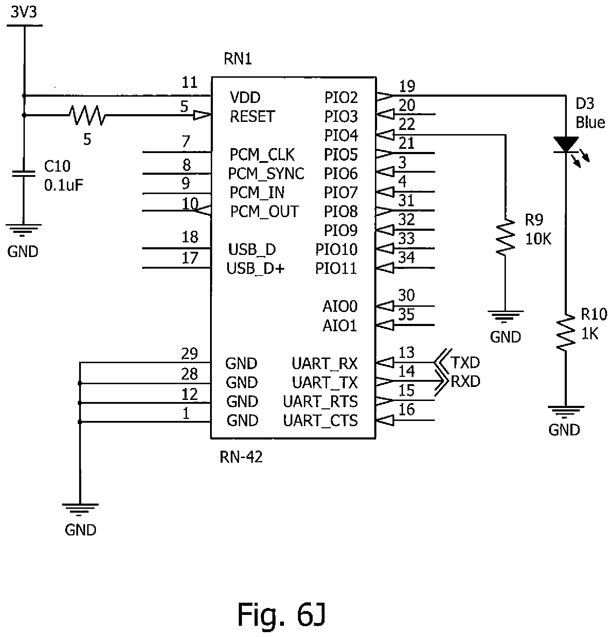

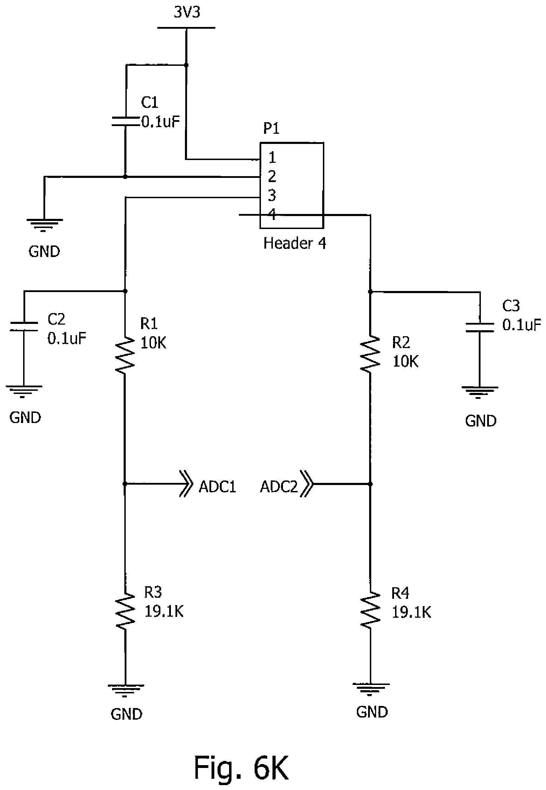

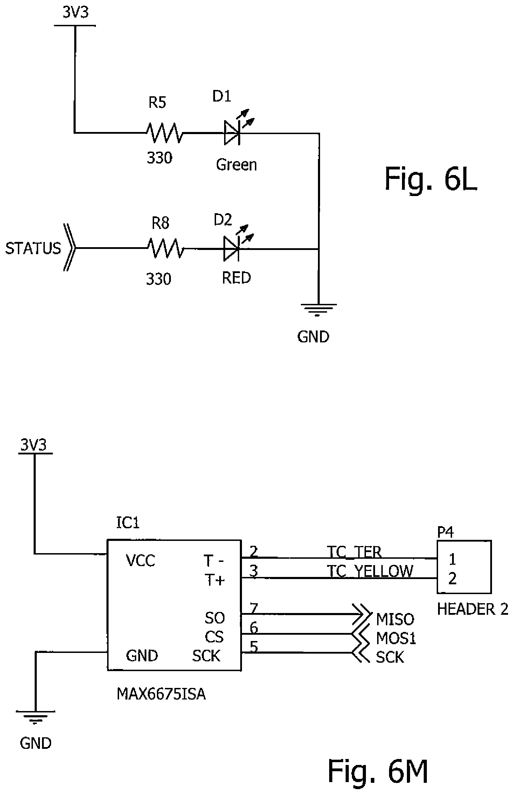

FIGS. **4-6** provide different types of illustrations of an exemplification of the electric circuit housed with the universal electronic monitoring device (**100**).

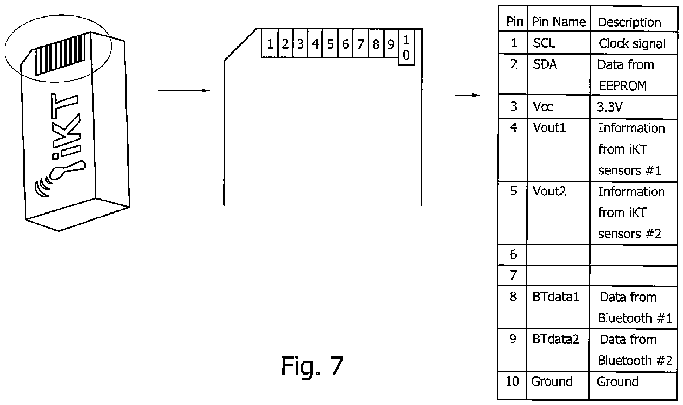

The circuit diagram of FIG. **4** discloses the 14 primary components of exemplified monitoring device's circuit from left to right: the Universal Serial Bus (USB) connector (**1**); the power charge (**2**); the power source- a 3.3 Volt battery (**3**); a switch (e.g. a reed switch) (**4**); a voltage regulator (**5**); a LED (**6**); a Bluetooth® module (**7**); a reset means (**8**); a microcontroller comprising an ISP programmer (**9**); an analog-to-digital converter (**10**); and the 10 pin connector on the outside of the monitoring device (**11**) (See FIG. **7** also). And the circuit within a compatible apparatus comprises: EEPROM chip (**12**); the controller, which is a function of the type of apparatus (**13**); and the Sensors (**14**).

In a preferred embodiment, the power source is via a 3.3 volt battery (**3**) that is rechargeable via a USB connector (**1**). Other power sources may be used with the monitoring device (**100**), as determined by the intended use and/or the location of the device (**100**). For example, a universal electronic monitoring device for use outdoors, such as a garden tool, may comprise a solar panel as a power source. One of ordinary skill in the art could readily modify the exemplified circuit of FIGS. **4-7** to be supplied with the appropriate type of power source.

One of ordinary skills in the art would know of other types of switches to activate the sensors and transmit data to the electronic monitoring device, such as leaf switches, proximity switches (capacitive, inductive), gravity-sensitive switch which senses the opening of the door, a mercury-type switch, a photo device which is actuated by the light entering the box when the door is opened or other suitable switch means, pressure switches (piezoelectric), and mechanical slide switches. In a preferred embodiment, the reed switch is activated by a magnet located within or upon the apparatus, wherein the magnet comes in close contact with the switch when the monitoring device (**100**) is inserted into the apparatus.

The universal electronic monitoring device may be used in a variety of venues for a variety of purposes. Therefore, the types of sensors (**14**) appropriate for use in the circuits of FIGS. **4-7** are determined by their function and power source requirements. For example, if the sensor measures weight (i.e. cooking ingredients), then the sensor may comprise a load cell with a 4 pin connection, while a sensor for measuring temperature may comprise a thermistor with a 2 pin connection.

FIG. 7 is an illustration of the 10-pin processor on the universal electronic monitoring device used to complete the electric circuit within compatible apparatuses. The pins comprise: a SCL - clock signal (**1**); a SDA- data from EEPROM chip (**2**); Vcc- 3.3 Volt (**3**); Vout1 - information from iKT sensors #1 (**4**); Vout2- information from iKT sensors #2 (**5**); BTdata1- data from Bluetooth chip #1 (**6**); BTdata2- data from Bluetooth chip #2 (7); and ground (**10**). The EEPROM chip (**2**) will provide the apparatus's function and unique identification number to the electronic monitoring device.

Additionally, the User's electronic communications device can act as a "control" device of the apparatuses by wirelessly transmitting commands to the universal electronic monitoring device, which subsequently transmits it to the sensors of the apparatus via the electronic circuit link between the two (10 pin processor).

### Exemplification of Mixing Bowl

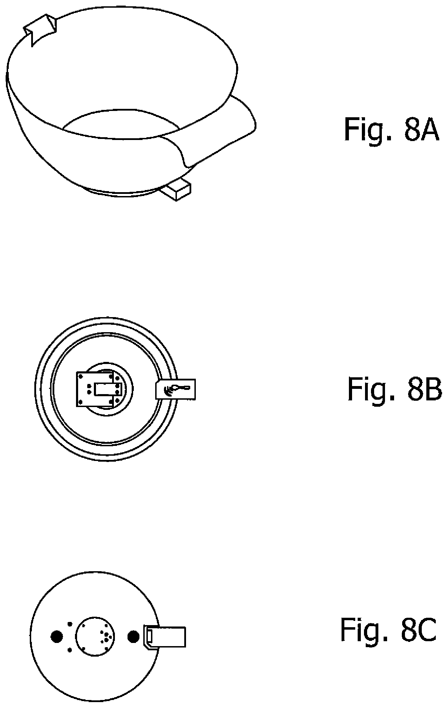

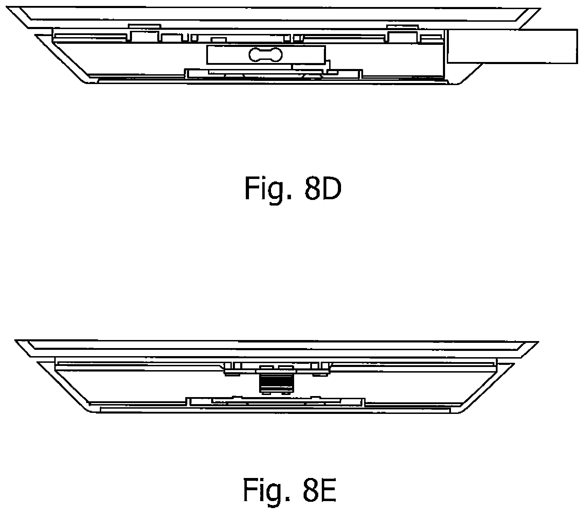

FIGS. **8A-E** illustrate a preferred embodiment of the present invention comprising various views of a mixing bowl apparatus, with a sensor unit to detect the weight of food and ingredients within the bowl, and with a universal electronic monitoring device plugged into the base of the bowl. FIG. **8A** is an isometric view of the bowl showing the monitoring device (i.e. iKT™ box) extending from the bowl's base. FIG. **8B** is an overhead view of the base of the bowl comprising the weight sensor and monitoring device. FIG. **8C** is an underside view of the same. FIG. **8D** is a side view of the base of the bowl showing the sensor unit within the bowl and the monitoring device extending outside of the bowl. And FIG. **8E** is a side view of the base of the bowl showing the end of the monitoring device inserted into the bowl base.

While the present invention has been described with reference to a few specific embodiments, the description is illustrative of the invention and is not to be construed as limiting the invention.

## Claims

1. A wireless cooking apparatus monitoring system, **characterised in that** it comprises:
a) two or more cooking apparatuses (200), each apparatus (200) housing a sensor unit (300) for monitoring one or more conditions within said apparatus (200) comprising: temperature, weight, viscosity, liquid volume, pressure, gas, contact, and sound, wherein said sensor unit (300) comprises an EEPROM card, a sensor, a magnet and a controller;
b) one or more monitoring devices (100), wherein a monitoring device (100) is inserted into one of said cooking apparatuses (200) to wirelessly transmit raw sensor data from the sensor unit (300) to an electronic communications device (400), said monitoring device (100) comprising:
i) a switch activated by said sensor unit (300) upon said monitoring device (100) insertion into said cooking apparatus (200),
ii) a microcontroller to process the cooking apparatus's raw sensor data, and
iii) a Bluetooth™ chip to wirelessly transmit the processed sensor data from the monitoring device microcontroller to an electronic communications device (400) ; and,
c) an electronic communications device (400) comprising computer readable medium containing computer executable instructions to wirelessly receive, store, analyze and display and/or emit an audio message comprising the sensor data from the one or more monitoring devices (100).

2. The system of claim 1, wherein the cooking apparatuses (200) transmit sensor data to the monitoring device (100) and receive apparatus operating commands from the monitoring device (100).

3. The system of claim 1, further comprising within said electronic communication device (400), computer readable medium containing computer executable instructions to transmit apparatus operating commands to said monitoring device (100).

4. The system of claim 1, further comprising within said electronic communication device (400), computer readable medium containing computer executable instructions to display information comprising apparatus utilization tips and cooking recipes.

## Patentansprüche

1. Drahtloses Kochgeräteüberwachungssystem, **gekennzeichnet dadurch, dass** es folgendes umfasst:
a) zwei oder mehr Kochgeräte (200), jedes mit einer Sensoreinheit (300) zur Überwachung einer oder mehrerer Zustände in dem Gerät (200), und zwar: Temperatur, Gewicht, Viskosität, Flüssigkeitsvolumen, Druck, Gas, Kontakt und Ton, wobei besagte Sensoreinheit (300) eine EEPROM-Karte, einen Sensor, einen Magneten und eine Steuerungumfasst;
b) eine oder mehrere Überwachungsvorrichtungen (100), wobei eine Überwachungsvorrichtung (100) in eines der Kochgeräte (200) eingesetzt wird, um drahtlos rohe Sensordaten von der Sensoreinheit (300) zu einer elektronischen Kommunikationsvorrichtung (400) zu übertragen, wobei die Überwachungsvorrichtung (100) folgendes umfasst:
i) einen Schalter, der von besagter Sensoreinheit (300) nach der Einfügung der Überwachungsvorrichtung (100) in das Kochgerät (200) aktiviert wird,
ii) einen Mikrocontroller, um die rohen Sensordaten des Kochgeräts zu verarbeiten, und
iii) einen Bluetooth™-Chip, um drahtlos die verarbeiteten Sensordaten von dem Mikrocontroller der Überwachungsvorrichtung zu einer elektronischen Kommunikationsvorrichtung (400) zu übertragen; und,
c) eine elektronische Kommunikationsvorrichtung (400) mit computerlesbarem Medium, das vom Computer ausführbare Anweisungen enthält, um eine Audiomitteilung drahtlos zu empfangen, zu speichern, zu analysieren und anzuzeigen und/oder auszustrahlen, die die Sensordaten von der einen oder den mehreren Überwachungsvorrichtungen (100) enthält.

2. System nach Anspruch 1, wobei die Kochgeräte (200) Sensordaten an die Überwachungsvorrichtung (100) übertragen und Befehle zum Betrieb des Geräts von der Überwachungsvorrichtung (100) empfangen.

3. System nach Anspruch 1, des weiteren umfassend, in der elektronischen Kommunikationsvorrichtung (400), ein computerlesbares Medium, das vom Computer ausführbare Anweisungen enthält, Befehle zum Betrieb des Geräts an die Überwachungsvorrichtung (100) zu senden.

4. System nach Anspruch 1, des weiteren umfassend, in der elektronischen Kommunikationsvorrichtung (400), ein computerlesbares Medium, das vom Computer ausführbare Anweisungen enthält, Informationen mit Tipps zur Verwendung des Geräts und Kochrezepte anzuzeigen.

## Revendications

1. Système de surveillance d'appareil de cuisine sans fil, **caractérisé par le fait qu'**il comprend :
a) au moins deux appareils de cuisine (200), chaque appareil (200) recevant une unité de capteur (300) pour surveiller une ou plusieurs conditions à l'intérieur dudit appareil (200) comprenant : la température, le poids, la viscosité, le volume de liquide, la pression, le gaz, le contact et le son, ladite unité de capteur (300) comprenant une carte EEPROM, un capteur, un aimant et un contrôleur ;
b) un ou plusieurs dispositifs de surveillance (100), un dispositif de surveillance (100) étant inséré dans l'un desdits appareils de cuisine (200) pour transmettre de manière sans fil des données de capteur brutes de l'unité de capteur (300) à un dispositif de communication électronique (400), ledit dispositif de surveillance (100) comprenant :
i) un commutateur activé par ladite unité de capteur (300) lors de l'insertion dudit dispositif de surveillance (100) dans ledit appareil de cuisine (200),
ii) un microcontrôleur pour traiter les données de capteur brutes de l'appareil de cuisine, et
iii) une puce Bluetooth™ pour transmettre de manière sans fil les données de capteur traitées du microcontrôleur de dispositif de surveillance à un dispositif de communication électronique (400) ; et
c) un dispositif de communication électronique (400) comprenant un support lisible par ordinateur contenant des instructions exécutables par ordinateur pour recevoir de manière sans fil, stocker, analyser, et afficher et/ou émettre un message audio comprenant les données de capteur provenant du ou des dispositifs de surveillance (100).

2. Système selon la revendication 1, dans lequel les appareils de cuisine (200) transmettent des données de capteur au dispositif de surveillance (100) et reçoivent des instructions de fonctionnement d'appareil en provenance du dispositif de surveillance (100).

3. Système selon la revendication 1, comprenant en outre, à l'intérieur dudit dispositif de communication électronique (400), un support lisible par ordinateur contenant des instructions exécutables par ordinateur pour transmettre des instructions de fonctionnement d'appareil audit dispositif de surveillance (100).

4. Système selon la revendication 1, comprenant en outre, à l'intérieur dudit dispositif de communication électronique (400), un support lisible par ordinateur contenant des instructions exécutables par ordinateur pour afficher des informations comprenant des conseils d'utilisation d'appareil et des recettes de cuisine.
